Europäisches Patentamt

European Patent Office

Office européen des brevets

(11) Veröffentlichungsnummer: **0 311 177 B1**

(12) **EUROPÄISCHE PATENTSCHRIFT**

(45) Veröffentlichungstag der Patentschrift: **15.12.93**

(51) Int. Cl.5: **G01N 23/02**

(21) Anmeldenummer: **88202105.8**

(22) Anmeldetag: **28.09.88**

(54) **Anordnung zur Untersuchung eines Körpers mit einer Strahlenquelle.**

(30) Priorität: **05.10.87 DE 3733599**
**10.06.88 DE 3819739**

(43) Veröffentlichungstag der Anmeldung:
**12.04.89 Patentblatt 89/15**

(45) Bekanntmachung des Hinweises auf die
Patenterteilung:
**15.12.93 Patentblatt 93/50**

(84) Benannte Vertragsstaaten:
**DE FR GB IT**

(56) Entgegenhaltungen:
**EP-A- 0 153 786          EP-A- 0 184 247**
**EP-A- 0 209 952          DE-A- 2 461 877**
**FR-A- 2 474 175          US-A- 4 020 346**

**PATENT ABSTRACTS OF JAPAN, Band 10 ,
Nr. 290 (P-503)(2346), 2. Oktober 1986;& JP-
A-61110078**

**PATENT ABSTRACTS OF JAPAN, Band 8, Nr.
101 (P-273)(1538), 12. Mai 1984;& JP-
A-59013236**

(73) Patentinhaber: **Philips Patentverwaltung
GmbH
Wendenstrasse 35c
D-20097 Hamburg(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB IT**

(72) Erfinder: **Harding, Geoffrey, Dr.
Poststrasse 18c
D-2083 Halstenbek(DE)**

(74) Vertreter: **Hartmann, Heinrich, Dipl.-Ing. et al
Philips Patentverwaltung GmbH,
Wendenstrasse 35c
D-20097 Hamburg (DE)**

**Beschreibung**

Die Erfindung betrifft eine Anordnung zur Untersuchung eines Körpers mit einer Strahlenquelle zur Erzeugung eines Primärstrahls mit geringem Querschnitt in Form eines pencil beams mit Mitteln zum Erzeugen einer Relativverschiebung zwischen dem Körper einerseits und dem Primärstrahl andererseits, mit mindestens einer die unter kleinen Streuwinkeln elastisch gestreute Strahlung erfassenden Detektoranordnung sowie mit Mitteln zum Bestimmen des Streuwinkels und gegebenenfalls des Impulsübertrags.

Eine solche Anordnung ist aus der EP-OS 153 786 bekannt. Damit kann für verschiedene Bereiche des Körpers die Intensität der Streustrahlung als Funktion des Streuwinkels bzw. des Impulsübertrages bestimmt werden, was Aussagen über den chemischen Zustand er bestrahlten Materie in dem jeweiligen Bereich zuläßt. Die bekannte Anordnung erlaubt allerdings nur eine Bestimmung der stofflichen Zusammensetzung in den beiden zum Primärstrahl senkrechten Richtungen. In Richtung des Primärstrahls ist eine Differenzierung nicht möglich.

In vielen Fällen ist jedoch auch eine Bestimmung der stofflichen Zusammensetzung in Richtung des Primärstrahls erwünscht. Wenn beispielsweise überprüft werden soll, ob sich ein bestimmter Stoff in einem Gepäckstück befindet, muß eine solche Bestimmung dreidimensional erfolgen. Aufgabe der vorliegenden Erfindung ist es daher, eine Anordnung der eingangs genannten Art so auszugestalten, daß auch in Richtung des Primärstrahls die Intensität elastisch gestreuter Strahlung als Funktion des Impulsübertrages ortsaufgelöst bestimmt werden kann.

Diese Aufgabe wird erfindungsgemäß dadurch gelöst, daß zwischen dem Körper und der Detektoranordnung mehrere Blendenlamellen so angeordnet sind, daß Streustrahlung aus verschiedenen, in Strahlrichtung versetzten Abschnitten des Primärstrahls jeweils auf verschiedenen Streifen auf der Meßfläche der Detektoranordnung trifft, daß die Detektoranordnung zwecks Bestimmung des Auftreffpunktes der gestreuten Röntgenquanten ein örtliches Auflösungsvermögen in Längsrichtung der Streifen aufweist und daß die Mittel zum Bestimmen des Streuwinkels aus dem jeweiligen Auftreffpunkt eines gestreuten Röntgenquants dessen Streuwinkel bestimmen.

Jeder der Streifen auf der Meßfläche der Detektoranordnung kann also nur von Streustrahlung getroffen werden, die von einem bestimmten Abschnitt auf dem Primärstrahl innerhalb des Körpers ausgeht. Von der Detektoranordnung kann nur solche Streustrahlung registriert werden, die in einem bestimmten Winkelbereich liegt. Der kleinste erfaßbare Streuwinkel hängt von der Neigung der Blendenlamellen zum Primärstrahl ab; wenn die Streustrahlung in einer senkrecht zu den Blendenlamellen angeordneten Ebene austritt, kann sie einen der Streifen unter diesem Streuwinkel erreichen. Auch unter einem größeren Streuwinkel austretende Streustrahlung wird von der Detektoranordnung registriert, wenn sie unter einem Winkel zu der genannten Ebene verläuft. Somit registriert jeder Streifen auf der Meßfläche einen Teil der auf dem zugeordneten Abschnitt des Primärstrahls in einem bestimmten Winkelbereich austretenden Streustrahlung. Damit für diesen Abschnitt die Streuintensität als Funktion des Streuwinkels bzw. des Impulsübertrages bestimmt werden kann, muß die Detektoranordnung in Längsrichtung der Streifen ein Ortsauflösungsvermögen aufweisen. Eine geeignete Detektoranordnung kann aus mehreren in Streifenrichtung verlaufenden Detektorzeilen bestehen, jedoch kann auch eine großflächige Detektoranordnung verwendet werden. Wenn die Strahlenquelle eine polychromatische Röntgen- oder Gammastrahlung erzeugt, muß die Detektoranordnung darüber hinaus auch noch ein Energieauflösungsvermögen besitzen, d.h., sie muß die Energie der jeweils gemessenen Röntgenquanten bestimmen können.

Es sei an dieser Stelle erwähnt, daß aus der DE-OS 24 61 877 bereits eine Anordnung zur Untersuchung eines Körpers mit einer Strahlenquelle zur Erzeugung eines Primärstrahls mit geringem Querschnitt (pencil-beam) bekannt ist, wobei zwischen dem Körper und der Detektoranordnung mehrere Blendenlamellen so angeordnet sind, daß Streustrahlung aus verschiedenen Abschnitten des Primärstrahls an unterschiedlichen Orten von einer Detektoranordnung registriert wird. Die Detektoranordnung erfaßt die in einem Bereich um 90° herum gestreuten Röntgenquanten. In diesem Winkelbereich dominiert die inelastisch gestreute Strahlung (Compton-Streuung).

Eine erste Weiterbildung der Erfindung sieht vor, daß die Detektoranordnung mehrere zueinander parallele streifenförmige Detektoren umfaßt, die außerhalb des vom Primärstrahl durchsetzten Bereichs die jeweils zwischen benachbarten Blendenlamellen hindurchtretende Streustrahlung erfassen und daß eine Blendenvorrichtung vorgesehen ist zum Ausblenden eines in einer zu den Detektoren parallen Ebene hin- und hergehenden Primärstrahls aus einem von der Strahlenquelle gelieferten Strahlenbündel. Da hierbei ein hin- und hergehender Primärstrahl durch die Blendenanordnung erzeugt wird, ohne daß die Strahlenquelle und die Detektoranordnung bewegt werden müssen, ist die Abtastung des Körpers relativ einfach. Allerdings setzt dies voraus, daß die Detektoren länger sind als der zu untersuchende Körper. Dies kann bei größeren Körpern (z.B. Gepäckstücken) zu sehr langen Detektoren führen, was die genaue Lokalisation des

2

Auftreffpunktes eines Röntgenquants und damit die genaue Bestimmung des Streuwinkels erschwert.

Eine andere Ausgestaltung der Erfindung sieht daher vor, daß die Detektoranordnung eine außerhalb des Primärstrahls angeordnete Gammakamera ist, die so auf den Primärstrahl ausgerichtet ist, daß die Normale auf ihre Eingangsfläche den Primärstrahl unter einem von Null verschiedenen Winkel schneidet. Dabei steht der Primärstrahl relativ zur Detektoranordnung still. Die Abmessungen der Detektoranordnung hängen dabei nicht von den Abmessungen des zu untersuchenden Körpers ab, und es kann daher als Detektoranordnung eine handelsübliche Gammakamera verwendet werden, die eine genauere Bestimmung des Auftreffpunktes eines Röntgenquants und damit eine genauere Bestimmung des Streuwinkels gestattet. Allerdings ist die Abtastung des Körpers erschwert, weil dabei entweder der Körper bewegt werden muß und/oder die Strahlenquelle mitsamt der Detektoranordnung.

Die Erfindung wird nachstehend anhand der Zeichnungen näher erläutert. Es zeigen:

Fig. 1          ein erstes Ausführungsbeispiel in schematischer Darstellung,
Fig. 2          eine schematische Ansicht von unten,
Fig. 3          eine Seitenansicht,
Fig. 4          eine Frontansicht des Ausführungsbeispiels,
Fig. 5          eine zweite Ausführungsform und
Fig. 6 und 7    die geometrischen Verhältnisse bei der Anordnung nach Fig. 5 in zueinander senkrechten, den Primärstrahl enthaltenden Ebenen.

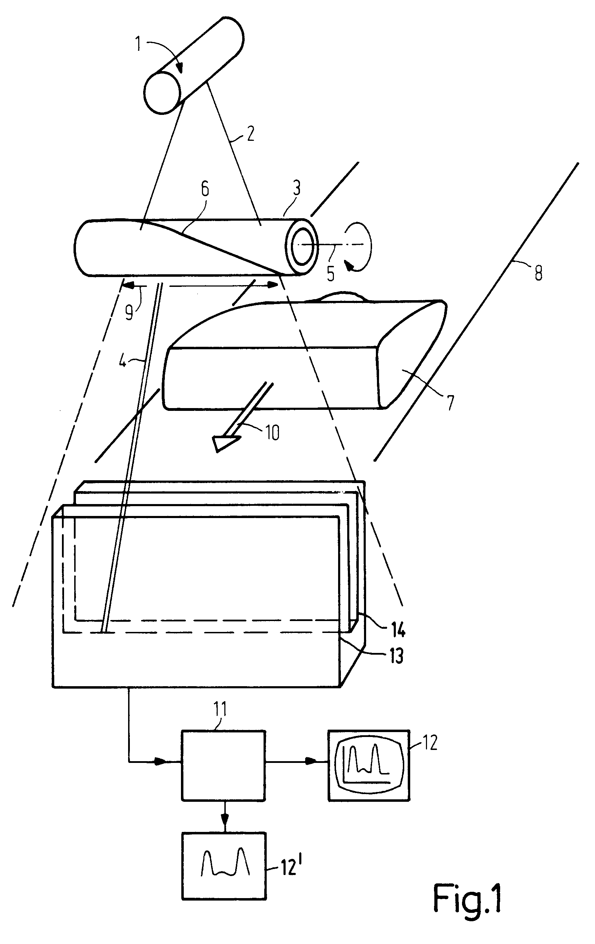

Fig. 1 zeigt ein Gepäckkontrollsystem, das es ermöglicht, das Vorhandensein eines bestimmten Stoffes beispielsweise eines Sprengstoffes, in dem Gepäckstück nachzuweisen. Diese Vorrichtung umfaßt einen Röntgenstrahler 1, der mittels einer nicht näher dargestellten Schlitzblende ein fächerförmiges Strahlenbündel 2 erzeugt. Das fächerförmige Strahlenbündel 2 trifft auf eine Blendenvorrichtung 3, die aus dem fächerförmigen Strahlenbündel einen hin- und hergehenden Strahl 4 mit geringem Querschnitt (pencil beam) ausblendet, der im folgenden als Primärstrahl bezeichnet wird. Die Vorrichtung umfaßt eine Hohlwalze 3, die aus strahlenabsorbierendem Material besteht, und mit zwei auf ihrem Umfang um 180° gegeneinander versetzten spiralförmigen Schlitzen 6 versehen ist, von denen in der Zeichnung nur einer zu erkennen ist. Die Röntgenstrahlung durchdringt auf der der Strahlenquelle 1 zugewandten Seite der Hohlwalze 3 den dort befindlichen Schlitz an einer Stelle und verläßt ihn auf der gegenüberliegenden Seite durch den anderen Schlitz. Wenn die Hohlwalze 3 um ihre Drehachse 5 mittels eines nicht näher dargestellten Elektromotors gedreht wird, wandert die Stelle, an der ein Strahl aus dem fächerförmigen Strahlenbündel 2 die Hohlwalze 3 durchdringt hin und her, so daß der aus der Hohlwalze 3 austretende Primärstrahl 4 innerhalb der durch den Strahlenfächer 2 gegebenen Ebene hin und her bewegt wird.

Die beschriebene Vorrichtung zur Erzeugung eines hin und her gehenden Primärstrahles ist an sich bekannt (vgl. DE-OS 34 43 095). An ihrer Stelle kann aber auch eine mit vier um 90° gegeneinander versetzten Radialschlitzen versehene rotierende Scheibe aus für Röntgenstrahlung nicht transparentem Material verwendet werden, die um eine außerhalb des Strahlenfächers befindliche und zu diesem parallele Achse rotiert.

Der innerhalb der vertikalen Ebene des Strahlenfächers 2 hin und hergehende Primärstrahl 4 durchsetzt einen Körper 7, in diesem Fall ein zu kontrollierendes Gepäckstück, das auf einem Transportband 8 transportiert wird. Die durch den Pfeil 9 angedeutete Richtung der hin und hergehenden Bewegung des Primärstrahles 4 und die durch den Pfeil 10 angedeutete Transportrichtung des Transportbandes stehen zueinander senkrecht. Die Geschwindigkeiten des Transportbandes 8 und der Hin- und Herbewegung des Primärstrahles 4 sind dabei so aufeinander abgestimmt, daß das Gepäckstück 7 innerhalb des Zeitraums, innerhalb dessen der Primärstrahl seinen durch die gestrichelten Linien angedeuteten Bewegungsbereich einmal durchläuft, nur um ein vergleichsweise kurzes Stück weitertransportiert wird, beispielsweise um eine Strecke, die der Dicke des Primärstrahles entspricht. Dadurch wird erreicht, daß das Gepäckstück 7 vollständig von dem Primärstrahl 4 abgetastet wird.

Unterhalb des Transportbandes 8 befindet sich eine Detektoranordnung. Diese enthält mindestens einen Detektor der sich außerhalb der vertikalen Ebene des Strahlenfächers 2 in einer dazu parallelen Ebene befindet und der eine langgestreckte Form aufweist und ebenfalls horizontal, jedoch senkrecht zur Richtung des Pfeiles 10 angeordnet ist. In der Ebene des Strahlenfächers ist darüber hinaus noch ein ebenfalls langgestreckter Detektor vorgesehen, der die Intensität der Primärstrahlung und damit die Absorption der Röntgenstrahlung durch das Objekt mißt.

Die Detektorausgangssignale werden in einer Schaltung 11 digitalisiert, und es wird auf noch zu erläuternde Weise der Verlauf der Streuintensität, normiert auf die Intensität des Primärstrahles als Funktion des Impulsübertrages bestimmt und auf einem Monitor 12 angezeigt. Gleichzeitig wird dieser Verlauf mit einem in einem Speicher 13 gespeicherten Verlauf verglichen, der die Streucharakteristik des nachzuweisenden Stoffes darstellt. Wenn die beiden Verläufe übereinstimmen bzw. nur geringfügig voneinander abweichen, ist dies ein Indiz dafür, daß der gesuchte Stoff in dem Gepäckstück vorhanden ist, was durch eine nicht näher dargestellte zusätzliche Anzeigeeinrichtung signalisiert wird.

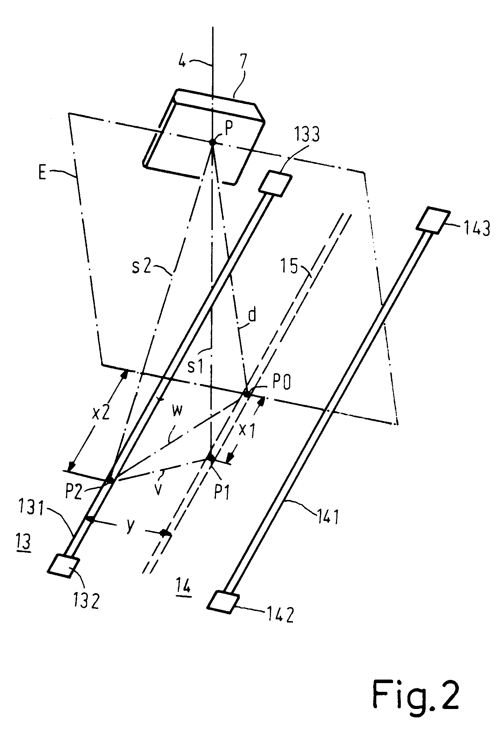

Fig. 2 zeigt zwei zur Erfassung der Streustrahlung bestimmte Detektoren 13 und 14. Diese Detektoren umfassen je einen langgestreckten Natriumjodidszintillator 131 bzw. 141, an dessen beiden Enden je ein Fotovervielfacher 132, 133 bzw. 142, 143 angeordnet ist. Die beiden Szintillatoren 131 und 141 erstrecken sich parallel zu der Ebene des Strahlenfächers 2 und senkrecht zur Bewegungsrichtung 10 des Gepäckstückes 7. Sie definieren eine Ebene, die zu der Ebene des Strahlenfächers 2 senkrecht steht. In Fig. 2 ist mit der Linie 15 der Streifen bezeichnet, in dem der Primärstrahl 4 die Ebene der Streustrahlendetektoren schneiden kann.

Wenn einer der Detektoren genau in der Mitte von einem Röntgen- oder Gammaquant getroffen wird, liefern die Fotovervielfacher 132 und 133 bzw. 142 und 143 gleichgroße Signale, wenn vorausgesetzt wird, daß die Fotovervielfacher identisch aufgebaut sind. Wenn hingegen einer der Szintillatorstreifen 131 bzw. 141 außerhalb der Mitte von einem Röntgen- oder Gammaquant getroffen wird, ist das Ausgangssignal des in der Nähe des Auftragspunktes des Röntgen- oder Gammaquants liegenden Fotovervielfachers (z.B. 132) größer als das des weiter entfernt liegenden Fotovervielfachers 133. Somit kann aus der Differenz der Signale der beiden Fotovervielfacher 132, 133 die Lage des Auftreffpunktes eines Gammaquants bestimmt werden. Auf der anderen Seite ist die Summe der Amplituden der beiden Fotovervielfachersignale zumindest näherungsweise der Energie der einfallenden Röntgen- oder Gammaquanten proportional. Somit kann aus der Summe der Amplituden der Fotovervielfachersignale auch die Energie des auf den Detektor auftreffenden Röntgen- oder Gammaquanten bestimmt werden.

In Fig. 2 sind verschiedene geometrische Hilfsgrößen eingezeichnet, mit deren Hilfe es möglich ist, den Streuwinkel eines von einem der Detektoren erfassten gestreuten Röntgenquants zu bestimmen.

Es sei angenommen, daß der Primärstrahl 4 zu einem bestimmten Zeitpunkt eine solche Lage hat, daß er die durch die Detektoren 13 und 14 definierte Ebene im Punkt P1 schneidet. Es sei weiterhin angenommen, daß im gleichen Zeitpunkt der Detektor 13 im Punkt P2 von einem gestreuten Röntgenquant getroffen wird. Der Punkt P, in dem der Primärstrahl den Körper 7 schneidet ist dabei mit P bezeichnet. An sich schneidet der Primärstrahl den Körper 7 nicht in einem Punkt, sondern in einem Abschnitt einer Geraden. Wenn die Länge dieses Abschnittes aber klein ist im Vergleich zum Abstand des Körpers 7, von den die Streustrahlung erfassenden Detektoren 13 und 14, kann in guter Näherung als Punkt P der Mittelpunkt dieses Abschnittes eingesetzt werden.

In Fig. 2 ist mit E eine Ebene bezeichnet, die den Punkt P enthält und die senkrecht zu den beiden Detektoren 13 und 14 verläuft. Diese Ebene schneidet den Streifen 15, in dem sich der Primärstrahl 4 bewegt, in dem Punkt P0.

Wenn der Abstand des Punktes P2 von dem Punkt P mit s2, der Abstand des Punktes P1 vom Punkt P s1 und der Abstand zwischen den beiden Punkten P1 und P2 mit v bezeichnet wird, dann läßt sich der Streuwinkel $\beta$, unter dem das im Punkt P2 auftreffende Röntgenquant im Punkt P gestreut worden ist, aus der Formel bestimmen:

$$(1) \qquad \cos \beta = \frac{s1^2 + s2^2 - v^2}{2\ s1\ s2}$$

Der Abstand s1 hängt von der momentanen Lage des Primärstrahles ab. Bezeichnet man den (festen) Abstand des Punktes P0 vom Punkt P mit d und den (zeitlich veränderlichen) Abstand des Punktes P1 vom Punkt P0 mit x1, dann läßt sich s1 mit Hilfe der folgenden Gleichung bestimmen:

$$(2) \qquad s1^2 = d^2 + x1^2$$

s1 ist durch die Lage des Primärstrahles bzw. durch die jeweilige Stellung der Hohlwalze 3 vorgegeben und damit auch x1. Die Schaltung 11 könnte somit einen Festwertspeicher enthalten, in dem für verschiedene Winkelstellungen der Hohlwalze 3 die vorberechneten Werte x1, s1 gespeichert sind. Es ist aber auch möglich, den Ort x1 zu messen, in dem für die Erfassung des Primärstrahles eine Vielzahl nebeneinander beispielsweise auf dem Streifen 15 angeordneter Detektoren verwendet wird. Der Wert x1 ergäbe sich dabei aus der Lage des jeweils von dem Primärstrahl getroffenen Detektors.

4

Wenn x2 der aus der Differenz der von den Fotovervielfachern 132 und 133 gelieferten Detektorsignale bestimmbare Abstand des Punktes P2 von der Ebene E ist und wenn y den (fest vorgegebenen) Abstand des Szintillatorstreifens 131 von der Ebene 2 des Strahlenfächers bezeichnet, läßt sich der Abstand w des Punktes P2 von dem Punkt P0 nach der Gleichung bestimmen:

(3)     $w^2 = x2^2 + y^2$

Somit ergibt sich für den Abstand des Punktes P2 vom Punkt P

(4)     $s2^2 = d^2 + w^2$

Der Abstand v zwischen den Punkten P2 und P1 ergibt sich aus der Gleichung

(5)     $v^2 = (2 - x1)^2 + y^2$

Der Streuwinkel $\beta$ läßt sich also entsprechend den Gleichungen (1) bis (5) bestimmen aus der aus den Ausgangssignalen der Fotovervielfacher 132 und 133 abgeleiteten Lage des Punktes P2, in dem der Szintillator 131 von einem gestreuten Röntgenquant getroffen wird, und aus der Lage des Primärstrahls in dem Augenblick, in dem der Streuprozeß stattfindet.

Aus dem Streuwinkel $\beta$ läßt sich der durch den Streuprozeß hervorgerufene Impulsübertrag X berechnen nach der Gleichung:

(6)     $X = E\sin(\beta/2)/(hc)$

Dabei ist E die Energie des gestreuten Röntgenquants, die sich aus der Summe der Amplituden der Ausgangssignale der Fotovervielfacher 132, 133 ergibt. h ist das Plank'sche Wirkungsquantum und c die Lichtgeschwindigkeit. Da elastisch gestreute Strahlung nur unter kleinen Streuwinkeln austritt, kann $\sin\beta$ ersetzt werden durch $\beta$. Unter Zusammenfassung der Konstanten zu einer neuen Konstanten k ergibt sich dann:

(7)     $X = kE\beta$

Die beschriebene Berechnung des Impulsübertrages wird für jeden Streuprozeß wiederholt, der von einem der für die Streustrahlung bestimmten Detektoren 13 oder 14 registriert wird. Dabei wird die Zahl der Streuprozesse pro Zeiteinheit (d.h. die Streuintensität) bestimmt, die einem bestimmten Impulsübertrag bzw. einem bestimmten Impulsübertragsbereich zugeordnet sind. Jeder Streuprozeß, der innerhalb eines Zeitraumes registriert wird, in dem der Primärstrahl sich um eine Strecke verschiebt, die seiner Dicke entspricht, ist einem bestimmten Volumenelement in dem Gepäckstück zugeordnet. Aus der Abhängigkeit der in diesem Zeitraum gezählten Streuprozesse von dem Impulsübertrag X ergibt sich die Streucharakteristik für dieses Volumenelement. Diese Streucharakteristik wird mit einer gespeicherten Charakteristik verglichen, und abhängig vom Ergebnis dieses Vergleichs wird ggf. eine Anzeigeeinrichtung aktiviert.

Beim weiteren Verschieben des Primarstrahls wird die Streucharakteristik weiterer, in einer zur Transportrichtung (Pfeil 10) senkrechten Ebene befindlicher Volumenelemente des Gepäckstücks untersucht. Danach werden die Volumenelemente in zu der erwähnten Ebene parallelen benachbarten Ebene untersucht, bis das gesamte Gepäckstück kontinuierlich und zweidimensional abgetastet worden ist.

Es leuchtet ein, daß die Intensität der Streustrahlung auch davon abhängt, wie stark der Primärstrahl durch den Körper absorbiert wird. Um einen von der Absorption unabhängigen, normierten Verlauf zu erhalten, muß daher der erhaltene Verlauf zu der Absorption der Streustrahlung in
Beziehung gesetzt werden. Dies kann dadurch erfolgen, daß die gemessene Streuintensität durch die Intensität des Primärstrahles hinter dem Körper 7 dividiert wird, wobei unterstellt wird, daß der Primärstrahl und die Streustrahlung durch den Körper 7 in gleicher Weise geschwächt werden. Die Messung der Intensität der Primärstrahlung kann mittels eines Detektors erfolgen, der den gleichen Aufbau haben kann wie die Detektoren 13 und 14, der aber auch aus einzelnen, nebeneinander angeordneten Detektorzellen bestehen kann, wie weiter oben erläutert wurde. Der Detektor muß parallel zu den Detektoren 13 und 14 in der Ebene des Strahlenfächers 2 angeordnet sein; er kann in der Ebene der Detektoren 13 und 14 liegen, kann aber auch in größerem Abstand von der Strahlenquelle angeordnet sein.

Wenn die Strahlenquelle 1 monochromatische Röntgenstrahlung liefern würde, wäre die Energie aller elastisch gestreuten Röntgenquanten gleich, weil die elastisch gestreuten Röntgenquanten bei dem Streuprozeß bekanntlich keine Energie verlieren. In diesem Fall wäre die Berechnung des Impulsübertrages entsprechend den Gleichungen 6 und 7 überflüssig, und es würde genügen, den Verlauf der Streuintensität bzw. des Streukoeffizienten als Funktion des Streuwinkels zu bestimmen.

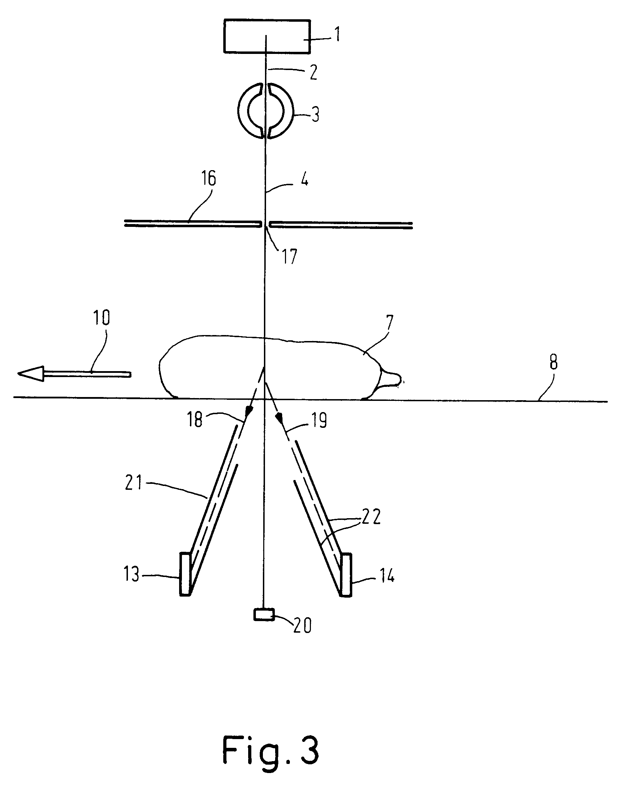

Fig. 3 zeigt die Anordnung nach Fig. 1 in einer seitlichen Darstellung. Die Drehachse des Hohlzylinders 3 verläuft dabei senkrecht zur Zeichenebene und zwischen dem zu untersuchenden Gepäckstück 7 und der Hohlwalze 3 ist noch eine zusätzliche Blendenplatte 16 aus strahlenabsorbierendem Material mit einem die Ebene des Strahlenfächers freihaltenden Schlitz 17 vorgesehen. Dadurch können Schwankungen der Dicke des Primärstrahles 4 als Funktion der jeweiligen Position x1 des Primärstrahles, die sich in der Praxis nicht ganz vermeiden lassen, eliminiert werden.

Wie bereits erwähnt, ist die Dicke des zu untersuchenden Objektes 7, das in Fig. 3 entsprechend dem Pfeil 10 von rechts nach links bewegt wird, nicht beliebig klein. Infolgedessen würde jeder Detektor Streustrahlung aus dem gesamten vom Primärstrahl 4 durchsetzten Bereich des Körpers 7 empfangen. Wenn der zu registrierende Stoff sich nur in einem Teil dieses Bereiches befinden würde, würde sich seine Charakteristik der Charakteristik desjenigen bzw. derjenigen Stoffe überlagern, die sich außerdem noch im Primärstrahl befinden. Dadurch könnte möglicherweise die gesuchte Charakteristik überdeckt werden.

Um dieses zu vermeiden sind, zwischen den Streustrahlendetektoren 13 und 14 und dem Transportband 8 auf dem der Körper transportiert wird, Stahllamellen 21 und 22 so angeordnet, daß der Detektor 13 nur von der im oberen Bereich des Körpers erzeugten Streustrahlung - symbolisiert durch den Strahl 18 - getroffen werden kann und der Detektor 14 nur von der im unteren Bereich erzeugten Streustrahlung, die durch die gestrichelte Linie 19 angedeutet ist. Jeder der beiden Detektoren erfaßt also lediglich die Streustrahlung aus einem Teilbereich des Körpers 7, so daß die von einem Detektor ermittelte Streucharakteristik unabhängig von der Streucharakteristik der im anderen Bereich des Primärstrahles befindlichen Stoffe ist.

Fig. 3 zeigt darüber hinaus einen Detektor 20 zur Messung der Intensität des Primärstrahles. Er ist in der Ebene des Fächers 2 und unterhalb dem durch die Detektoren 13 und 14 definierten Ebene angeordnet. - Wie bereits erwähnt, konzentriert sich die elastisch gestreute Strahlung im wesentlichen auf einen Winkelbereich zwischen 0 und 10° mit der Richtung des Primärstrahles. Infolgedessen müssen die Detektoren 13 und 14 wesentlich dichter an der Ebene des Strahlenfächers 2 liegen als in Fig. 3 dargestellt.

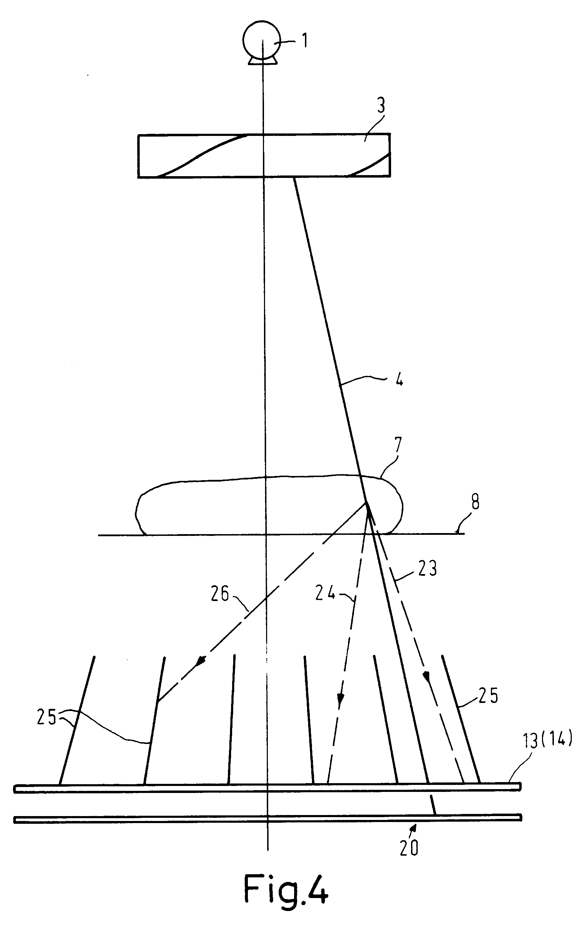

Fig. 4 zeigt die Anordnung in einer Frontansicht, in der die Verschiebungsrichtung des Transportbandes senkrecht auf der Zeichenebene steht. Die Lamellen 21 und 22 sowie der Schlitz 16 sind der Übersicht halber fortgelassen. Zwischen dem Transportband 8 und den Streustrahlendetektoren befinden sich Streustrahlenlamellen 25, die aus die Röntgenstrahlung absorbierendem Material bestehen. Sie sind in Ebenen angeordnet, die auf den Röntgenstrahler 1 ausgerichtet sind. Infolgedessen beeinflussen sie den Primärstrahl nicht. Sie lassen auch die unter kleinen Streuwinkeln austretende Streustrahlung - in Fig. 4 durch die Strahlen 23 und 24 angedeutet - ungehindert durch, während sie die unter größeren Streuwinkeln austretende Streustrahlung - wie durch den Strahl 26 angedeutet, - absorbieren. Da die unerwünschte Comptonstreustrahlung im wesentlichen unter größeren Streuwinkeln austritt, wird durch die Lamellen 25 also die unerwünschte Comptonstreustrahlung (Strahl 26) unterdrückt, während die erwünschte elastische Streustrahlung (Strahlen 23, 24) durch die Lamellen praktisch nicht beeinflußt wird.

Vorstehend wurde die Verwendung der Erfindung bei einem Gepäckkontrollsystem beschrieben. Sie ist aber auch bei Untersuchungen am Menschen anwendbar, beispielsweise bei der Untersuchung auf Osteoporose. Von Osteoporose befallene Knochen haben nämlich eine ganz andere Streucharakteristik als gesunde Knochen. Dadurch wird die Früherkennung dieser Krankheit möglich.

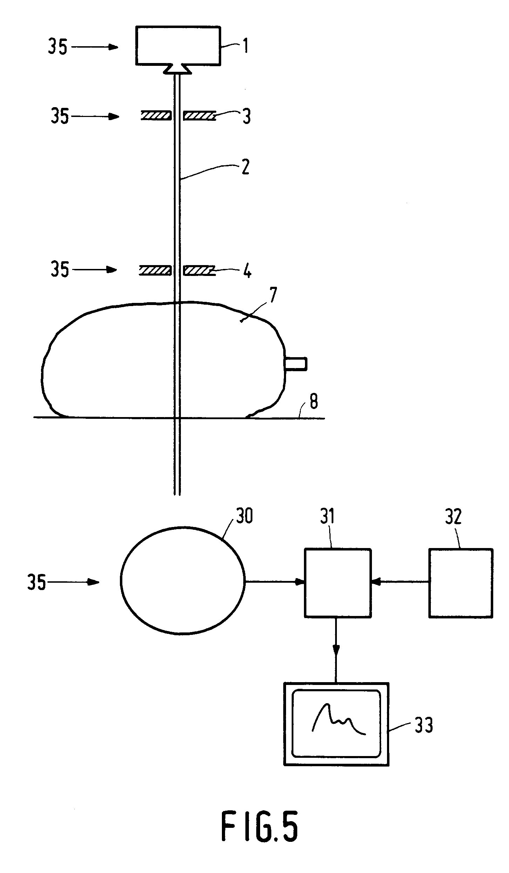

Wie bereits erwähnt, müssen bei der in den Fig. 1 bis 4 beschriebenen Ausführungsform die Detektoren 13, 14 länger sein als der zu untersuchende Körper. Dies kann bei einer Anwendung zur Gepäckkontrolle zu sehr langen und damit auch teuren Detektoren führen. Bei derartigen Detektoren ist es besonders schwierig, den genauen Auftreffpunkt eines Röntgenquants zu bestimmen, so daß sich der Streuwinkel dieses Röntgenquants in der Praxis nicht mit der erforderlichen Genauigkeit ermitteln läßt. Dieser Nachteil wird bei der in Fig. 5 dargestellten für die Untersuchung von Gepäckstücken besonders geeigneten Ausführungsform vermieden, bei der der Primärstrahl 2 relativ zu der Detektoranordnung still steht. Dabei sind für Teile der Anordnung, die die gleiche Bedeutung haben wie in Fig. 1 bis 4, dieselben Bezugszeichen benutzt.

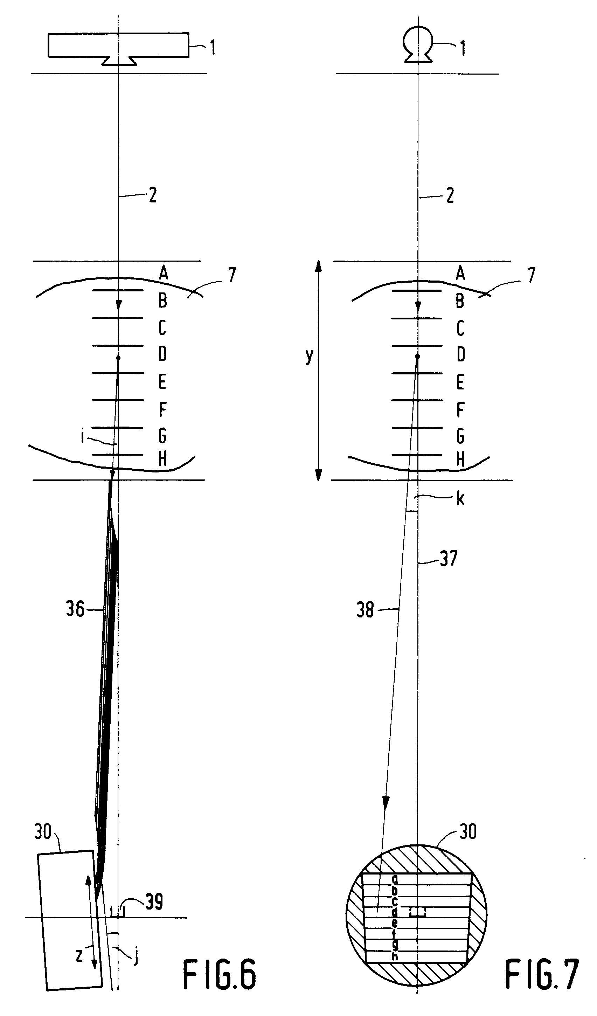

Das zu untersuchende Gepäckstück 7 befindet sich dabei auf einem senkrecht zur Zeichenebene verlaufenden Transportband, das schrittweise angetrieben werden kann. Die Untersuchung erfolgt mittels des dünnen, durch Blenden 3 und 4 aus dem Strahlbündel eines Röntgenstrahlers 1 erzeugten Primärstrahls (Pencil-beam). Die elastisch - und damit ohne Energieverlust - gestreute Röntgenstrahlung, die in dem den Körper 7 durchsetzenden Bereich des Primärstrahls 2 erzeugt wird, wird von einer Gammakamera 30 gemessen, wobei die in unterschiedlichen Tiefen des Körpers 7 erzeugte Streustrahlung mittels einer in Fig. 5 (und Fig. 7) nicht näher dargestellten Blendenanordnung getrennt meßbar ist - wie noch erläutert wird. Wie durch Pfeile 35 angedeutet, können die Strahlenquelle 1 und die Gammakamera 30 mitsamt den zwischen der Strahlenquelle und dem Körper 7 befindlichen Blenden 3 und 4 waagerecht, d.h. senkrecht zum Primärstrahl und senkrecht zur Verschiebungsrichtung des Gepäckstücks verschoben werden. Durch diese zweifache Relativverschiebung zwischen Objekt 7 und Primärstrahl 2 ist eine zweidimensionale Abtastung möglich.

Die Gammakamera kann den gleichen Aufbau haben wie die für medizinische Untersuchungen benutzten Gammakameras. Dabei wird die Meßfläche durch einen großformatigen, vorzugsweise kreisrunden, Szintillatorkristall gebildet, auf dessen Rückseite eine Anzahl von Photomultipliern nach einem regelmäßigen Wabenmuster angeordnet ist. Ein auf den Szintillatorkristall auftreffendes Röntgen- oder Gammaquant erzeugt am Auftreffpunkt Licht, das sich innerhalb des Kristalls ausbreitet und deshalb von jedem der Photomultiplier registriert wird. Die Intensität des Lichts hängt außer von der Energie des Gammaquants vom Abstand des jeweiligen Photomultipliers von der Auftreffstelle des Gammaquants auf dem Szintillatorkristall ab. Auf den Ausgangssignalen sämtlicher Photomultiplier kann daher sowohl der Auftreffpunkt eines Röntgen- oder Gammaquants als auch dessen Energie bestimmt werden. Neben diesem Orts- und Energieauflösungsvermögen besitzt eine nach diesem - von Anger entwickelten - Prinzip arbeitende Gammakamera noch ein zeitliches Auflösungsvermögen, d.h. die Position und die Energie von zeitlich nacheinander auftreffenden Quanten, können getrennt gemessen werden.

Wie sich aus Fig. 6 ergibt, ist zwischen dem Untersuchungsbereich, d.h., dem Bereich, in dem sich der zu untersuchende Körper bzw. das zu untersuchende Gepäckstück üblicherweise befinden, und der Gammakamera eine Blendenanordnung 36 mit einer Anzahl paralleler,ebener Blendenlamellen aus einem Röntgenstrahlung stark absorbierenden Material angeordnet. Diese Blendenlamellen liegen in Ebenen, die den Primärstrahl im Untersuchungsbereich unter einem Winkel i von z.B. 2° schneiden, wobei der Untersuchungsbereich durch diese Schnittpunkte in eine Anzahl gleichlanger Abschnitte A...H unterteilt wird. Die von den Abschnitten A bis H im Untersuchungsbereich vom Primärstrahl ausgehende Streustrahlung durchsetzt die Blendenanordnung 36 und trifft jeweils auf einen der Streifen a...h auf der Meßfläche - dem Szintillatorkristall der Gammakamera - auf; die im Abschnitt A gestreute Strahlung trifft beispielsweise den Streifen a (Fig. 7), die im Abschnitt B gestreute Strahlung trifft den Abschnitt b usw.

Wenn die Abmessung z der Gammakamera in Richtung senkrecht zu den Streifen der Dicke y des Untersuchungsbereiches entspräche, könnte die Meßfläche der Gammakamera parallel zum Primärstrahl verlaufen (in diesem Fall würde die Normale auf das Zentrum der Meßfläche den Primärstrahl senkrecht schneiden). Da die Abmessungen der Gammakamera aber in der Regel kleiner sind, muß die Kamera so geneigt werden, daß die Meßfläche mit dem Primärstrahl einen von Null verschiedenen Winkel j einschließt (die erwähnte Normale schneidet den Primärstrahl dann unter einem Winkel, der kleiner ist als 90°). Dabei gilt die Beziehung:

$$z/y = i/(i+j) \qquad (8)$$

Ist der Winkel j größer, als sich aus der Gleichung (1) ergibt, dann können nicht mehr sämtliche Abschnitte A bis H auf der Gammakamera abgebildet werden; ist der Winkel hingegen kleiner, wird die Breite der einzelnen Streifen auf der Gammakamera schmaler als nötig, so daß die Gefahr vergrößert wird, daß Gammaquanten, die von einem bestimmten Abschnitt auf dem Primärstrahl ausgehen, durch die Auswerteelektronik der Gammakamera einem benachbarten Streifen bzw. einem benachbarten Abschnitt zugeordnet werden. Deshalb sollte der Neigungswinkel der Gammakamera entsprechend Gleichung (8) bemessen sein.

Ein gesonderter Detektor 39 mißt die Intensität des aus dem Körper 7 austretenden Primärstrahls 2. Dies ist insbesondere dann erforderlich, wenn die Streudichteverteilung aus den gemessenen Werten der Gammakamera rekonstruiert werden soll.

In der Praxis ist der Primärstrahl 2 kein Strahl im mathematischen Sinn, sondern er hat einen endlichen Querschnitt. Die in einer genau definierten Tiefe erzeugte Streustrahlung trifft einen Punkt auf der Meßfläche des Detektors nicht unter einem definierten Winkel, sondern in einem gewissen Winkelbereich. Deshalb kann einem Punkt auf dem Streifen ein Streuwinkel nur näherungsweise zugeordnet werden. Um die dadurch bedingte Ungenauigkeit bei vorgegebenem Querschnitt möglichst klein zu halten, sollte der Querschnitt länglich, vorzugsweise ellipsenförmig sein, wobei die große Achse der Ellipse doppelt so groß sein soll wie die kleine Achse und parallel zur Längsrichtung der Streifen sein soll.

In Fig. 7 bezeichnet 37 eine den Primärstrahl enthaltende, zu der Blendenanordnung 36 bzw. zur Zeichenebene der Fig. 7 senkrechte Ebene. Diese Ebene ist - weil die Normale auf das Zentrum der Meßfläche der Gammakamera den Primärstrahl schneidet - zugleich die Symmetrieebene für jeden der Streifen a...h. Der kleinste Streuwinkel, unter dem im Primärstrahl gestreute Strahlung die Gammakamera erreichen kann, ist durch die Neigung der Blendenanordnung 36 bestimmt. Er beträgt i = 2°. In diesem Fall verläuft die Streustrahlung in der Symmetrieebene 37 und trifft den zugehörigen Streifen in seiner Mitte. Daneben gibt es Streustrahlung, die - wie der einzeln eingezeichnete Streustrahl 38 in Fig. 7 den zugehörigen Streifen (d) nicht in der Mitte trifft, sondern mehr am Rande unter einem Winkel k zur Ebene 37 verläuft. Der diesem Streustrahl zugeordnete Streuwinkel entspricht der Wurzel aus der Summe der Quadrate der Winkel i und k in guter Näherung, solange der Winkel kleiner ist als 10°. Auf diese Weise ist jeder Punkt auf einem der Streifen a...h einem bestimmten Streuwinkel zugeordnet, wobei der Streuwinkel von 2° (in der Mitte des Streifens) bis z.B. 6° (am Ende des Streifens) wächst. Der zugehörige Impulsübertrag X hat den Wert

$$X = \beta/2L \qquad (9)$$

Dabei ist $\beta$ der Streuwinkel und L die Wellenlänge, die aus der mit der Gammakamera gemessenen Energie E des einzelnen Quants nach der bekannten Beziehung L = hc/E bestimmt werden kann (h Plank'sches Wirkungsquantum; c Lichtgeschwindigkeit).

Auf diese Weise kann jedes auf die Meßfläche der Gammakamera auftreffende Röntgenquant einem bestimmten Abschnitt aus den Abschnitten A...H sowie einem bestimmten Impulsübertrag bzw. Impulsübertragsbereich zugeordnet werden. Die Auswerteeinheit 31, der die Ausgangssignale der Gammakamera 30 zugeführt werden, zählt demgemäß für jeden Abschnitt und für jeden Impulsübertragsbereich die Zahl der pro Zeiteinheit auftreffenden Gammaquanten. Aus der Zahl der während einer Zeiteinheit registrierten Quanten läßt sich somit für jeden Abschnitt A...H der Verlauf der Intensität als Funktion des Impulsübertrages bestimmen. Entspricht eine der so für die verschiedenen Abschnitte gewonnenen Streucharkteristiken der in einem Speicher 32 gespeicherten, für einen bestimmten Stoff, z.B. Sprengstoff, kennzeichnenden Charakteristik, wird dies von der Auswerteschaltung 31 signalisiert. Mit der Auswerteschaltung 32 ist eine geeignete Anzeigeschaltung, z.B. ein Monitor 33, gekoppelt.

Die beschriebene Messung der Streucharakteristik der verschiedenen Abschnitte wird für verschiedene Stellungen des Primärstrahls 2 relativ zum Körper 7 und für die einzelnen Verschiebungsschritte des Transportbandes 8 wiederholt, so daß am Ende sämtliche Volumenbereiche des Objektes 7 auf das Vorhandensein des gesuchten Stoffes kontrolliert sind.

Es ist auch möglich, zur Messung zusätzlich eine zweite Blenden-Detektoranordnung einzusetzen, die gegenüber der ersten um 180° versetzt angeordnet ist (bezogen auf den Primärstrahl. Dadurch kann dsas Signal/Rauschverhältnis verbessert bzw. die Meßzeit verkürzt werden.

**Patentansprüche**

1. Anordnung zur Untersuchung eines Körpers (7) mit einer Strahlenquelle (1) zur Erzeugung eines Primärstrahls mit geringem Querschnitt in Form eines pencil beams, mit Mitteln (8) zum Erzeugen einer Relativverschiebung zwischen dem Körper (7) einerseits und dem Primärstrahl (2) andererseits, mit mindestens einer die unter kleinen Streuwinkeln elastisch gestreute Strahlung erfassenden Detektoranordnung (30) sowie mit Mitteln zum Bestimmen des Streuwinkels und gegebenenfalls des Impulsübertrags,
dadurch gekennzeichnet, daß zwischen dem Körper und der Detektoranordnung (13, 14; 30) mehrere Blendenlamellen (21, 22; 20) so angeordnet sind, daß Streustrahlung aus verschiedenen, in Strahlrichtung versetzten Abschnitten (A ..... H) des Primärstrahls jeweils auf verschiedenen Streifen (a ..... h) auf der Meßfläche der Detektoranordnung trifft, daß die Detektoranordnung zwecks Bestimmung des Auftreffpunktes der gestreuten Röntgenquanten ein örtliches Auflösungsvermögen in Längsrichtung der Streifen aufweist und daß die Mittel zum Bestimmen des Streuwinkels aus dem jeweiligen Auftreffpunkt eines gestreuten Röntgenquants dessen Streuwinkel bestimmen.

2. Anordnung nach Anspruch 1,
dadurch gekennzeichnet, daß die Detektoranordnung mehrere zueinander parallele streifenförmnige Detektoren (13, 14) umfaßt, die außerhalb des vom Primärstrahl durchsetzten Bereichs die jeweils zwischen benachbarten Blendenlamellen (21, 22) hindurchtretende Streustrahlung erfassen und daß eine Blendenvorrichtung (3, 6) vorgesehen ist zum Ausblenden eines in einer zu den Detektoren parallen Ebene hin- und hergehenden Primärstrahls aus einem von der Strahlenquelle (1) gelieferten Strahlenbündel (2).

3. Anordnung nach einem der vorhergehenden Ansprüche,
dadurch gekennzeichnet, daß jeder Detektor einen langgestreckten Szintillationskristall (131, 141) vorzugsweise aus Natriumjodid, enthält, an dessen Enden Photovervielfacher (132, 133, 142, 143) vorgesehen sind.

4. Anordnung nach einem der Ansprüche 2 oder 3,
dadurch gekennzeichnet, daß als Blendenvorrichtung eine drehbare Hohlwalze (7) dient, deren Mantel mit zwei auf dem Umfang um 180° gegeneinander versetzten, spiralförmigen Schlitzen (6) versehen ist, durch die der Primärstrahl an jeweils einer Stelle hindurchtritt.

5. Anordnung nach Anspruch 1,
dadurch gekennzeichnet, daß die Detektoranordnung eine außerhalb des Primärstrahls angeordnete Gammakamera (30) ist, die so auf den Primärstrahl ausgerichtet ist, daß die Meßfläche den Primärstrahl unter einen von Null verschiedenen Winkel schneidet.

6. Anordnung nach einem der vorhergehenden Ansprüche,
dadurch gekennzeichnet, daß der Querschnitt durch den Primärstrahl (2) zumindest näherungsweise die Form einer Ellipsehat, deren Längsachse parallel zur Richtung der Streifen verläuft und doppelt so groß ist wie die Querachse.

7. Anordnung nach einem der vorhergehenden Ansprüche,
dadurch gekennzeichnet, daß die Strahlenquelle ein polychromatischer Röntgenstrahler ist und daß der bzw. die die Streustrahlung erfassende(n) Detektor(en) die Energie der Streustrahlung mißt.

8. Anordnung nach einem der vorhergehenden Ansprüche,
dadurch gekennzeichnet, daß die Mittel zum Erzeugen einer Relativverschiebung ein Transportband (8) umfassen, auf dem der Körper (7) angeordnet ist.

9. Anordnung nach einem der vorhergehenden Ansprüche,
dadurch gekennzeichnet, daß jenseits des Körpers (7) Streustrahlenlamellen (25) vorgesehen sind, die sich in auf die Strahlenquelle ausgerichteten Ebenen befinden.

10. Anordnung nach einem der vorhergehenden Ansprüche,
dadurch gekennzeichnet, daß innerhalb des vom Primärstrahl durchsetzten Bereiches ein Detektor (20; 39) zur Messung der Intensität des Primärstrahls (4) hinter dem Körper (7) vorgesehen ist.

**Claims**

1. An arrangement for examining a body (7), comprising a radiation source (1) for producing a primary beam of small cross-section in the form of a pencil beam, means (8) for producing a relative displacement between the body (7) on the one hand and the primary beam (2) on the other hand, at least one detector device (30) which detects the radiation elastically scattered at small scatter angles, and means for determining the seatter angle and, if described, the momentum transfer, characterized in that several diaphragm lamellae (21, 22; 20) are arranged between the body and the detector device (13, 14; 30) in such a manner that scattered radiation from different sections (A...H) of the primary beam, offset in the beam direction is incident each time on different strips (a ... h) on the measuring surface of the detector device, the detector device (30) having a spatial resolution in the longitudinal direction of the strips, the means for determining the scatter angle determining the scatter angle of a scattered X-ray quantum from its point of incidence.

2. An arrangement as claimed in Claim 1, characterized in that the detector device comprises a plurality of parallel-arranged strip shaped detectors (13, 14) which detect, outside the area traversed by the primary beam, the scattered radiation emanating each time between neighbouring diaphragm lamellae (21, 22), there being provided a diaphragm device (3, 6) for forming, from a radiation beam (2) supplied by the radiation source (1), a primary beam which swings back and forth in a plane parallel to the detectors.

3. An arrangement as claimed in any one of the preceding Claims, characterized in that each detector comprises an elongate scintillation crystal (131, 141), preferably of sodium iodide, at the ends of which there are provided photomultipliers (132, 133, 142, 143).

**4.** An arrangement as claimed in any one of the Claims 2 or 3, characterized in that a rotatable hollow roller (7) is used as the diaphragm device, in the surface of which there are provided two spiral-shaped slits (6), which are offset 180° on the circumference and where through the primary beam passes in each time one position.

**5.** An arrangement as claimed In Claim 1, characterized In that the detector device is a gamma camera (30) which is arranged outside the primary beam and is aligned relative to the primary beam in such a manner that the measuring surface intersects the primary beam at an angle other than zero.

**6.** An arrangement as claimed in any one of the preceding Claims, characterized in that the cross-section of the primary beam (2) is shaped at least approximately as an ellipse whose longitudinal axis extends parallel to the direction of the strips and amongst to twice the transverse axis.

**7.** An arrangement as claimed in any one of the preceding Claims, characterized in that the radiation source is a polychromatic X-ray source, and that the detector(s) detecting the scattered radiation measure(s) the energy of the scattered radiation.

**8.** An arrangement as claimed in any one of the preceding Claims, characterized in that the means for producing a relative displacement comprise a conveyor belt (8) on which the body (7) is arranged.

**9.** An arrangement as claimed in any one of the preceding Claims, characterized in that scattered radiation lamellae (25) which lamellae are located in planes aligned relative to the radiation source are provided at the other side of the body (7).

**10.** An arrangement as claimed in any one of the preceding Claims, characterized in that a detector (20; 39) for measuring the intensity of the primary beam (4) is arranged behind the body (7) and within the area traversed by the primary beam.

**Revendications**

**1.** Système pour examiner un corps (7) comportant une source de rayonnement (1) pour produire un rayon primaire de faible section transversale sous la forme d'un pencil beam, des moyens (8) pour produire un mouvement relatif entre le corps (7), d'une part, et le rayon primaire (2), d'autre part, au moins un dispositif de détection (30) captant le rayonnement diffusé de manière élastique sous de petits angles de diffusion ainsi que des moyens pour déterminer l'angle de diffusion et éventuellement le transfert d'impulsions, caractérisé en ce qu'entre le corps et le dispositif de détection (13, 14; 30) plusieurs lamelles formant écran (21, 22; 20) sont agencées de façon que le rayonnement diffusé provenant de divers segments (A...H) du rayon primaire décalés dans la direction du rayon frappe respectivement diverses bandes (a...h) de la surface de mesure du dispositif de détection que le dispositif de détection présente, dans le but de déterminer le point d'impact des quanta de rayons X diffusés, un pouvoir de résolution local dans la direction longitudinale des bandes et que les moyens de détermination de l'angle de diffusion déterminent à partir du point d'impact respectif d'un quantum de rayons X diffusés l'angle de diffusion de ce quantum.

**2.** Système selon la revendication 1, caractérisé en ce que le dispositif de détection comprend plusieurs détecteurs (13, 14) en forme de bandes parallèles l'un à l'autre qui captent, en dehors du domaine traversé par le rayon primaire, le rayonnement diffusé passant respectivement entre des lamelles formant écran (21, 22) voisines et il est prévu un dispositif de collimation (3, 6) pour collimater un rayon primaire allant et venant dans un plan parallèle aux détecteurs à partir d'un faisceau de rayons (2) fourni par la source de rayonnement (1).

**3.** Système selon l'une quelconque des revendications précédentes, caractérisé en ce que chaque détecteur contient un cristal de scintillation très allongé (131, 141), de préférence à base d'iodure de sodium aux extrémités duquel sont prévus des photomultiplicateurs (132, 133, 142, 143).

**4.** Système selon la revendication 2 ou 3, caractérisé en ce qu'on utilise comme dispositif de collimation un cylindre creux rotatif (7) dont l'enveloppe présente deux fentes hélicoïdales (6) décalées l'une de l'autre de 180° sur sa périphérie, à travers lesquelles le rayon primaire passe chaque fois en un

10

endroit.

5. Système selon la revendication 1, caractérisé en ce que le dispositif de détection est une gamma-caméra (30) disposée à l'extérieur du rayon primaire, et alignée sur le rayon primaire, de telle sorte que la surface de mesure coupe le rayon primaire sous un angle différent de zéro.

6. Système selon l'une quelconque des revendications précédentes, caractérisé en ce que la section transversale du rayon primaire (2) a au moins approximativement la forme d'une ellipse dont l'axe longitudinal s'étend parallèlement à la direction des bandes et vaut le double de la grandeur de l'axe transversal.

7. Système selon l'une quelconque des revendications précédentes, caractérisé en ce que la source de rayonnement est une source de rayons X polychromatique et le ou les détecteurs captant le rayonnement diffusé mesure(nt) l'énergie du rayonnement diffusé.

8. Système selon l'une quelconque des revendications précédentes, caractérisé en ce que les moyens produisant le mouvement relatif comprennent une bande transporteuse (8) sur laquelle le corps (7) est disposé.

9. Système selon l'une quelconque des revendications précédentes, caractérisé en ce que, de l'autre côté du corps (7), des lamelles (25) pour le rayonnement diffusé sont prévues et se trouvent dans des plans alignés sur la source de rayonnement.

10. Système selon l'une quelconque des revendications précédentes, caractérisé en ce que, à l'intérieur de la zone traversée par le rayon primaire, il est prévu un détecteur (20, 39) pour mesurer l'intensité du rayon primaire (4) derrière le corps (7).

Fig.1

Fig.2

Fig.3

Fig.4

FIG.5

FIG.6

FIG.7